# EUROPÄISCHE PATENTSCHRIFT

(11) **EP 0 698 937 B1**
(45) Veröffentlichungstag und Bekanntmachung des Hinweises auf die Patenterteilung: **31.07.2002**
(21) Anmeldenummer: 95106832.9
(22) Anmeldetag: 05.05.1995
(51) Int. Cl.: H01M 10/52, H01M 10/34, H01M 4/24

(54) **Gasdicht verschlossener Metalloxid/Metallhydrid-Akkumulator**
Gastight metaloxide-metalhydride accumulator
Accumulateur étanche de type oxyde métallique-hydrure métallique

(30) Priorität: 29.07.1994 DE 4426958
(43) Veröffentlichungstag der Anmeldung: 28.02.1996
(73) Patentinhaber: Microbatterie GmbH, 30419 Hannover (DE)
(72) Erfinder: Köhler, Uwe, Dr., D-65779 Kelkheim (DE); Chen, Guangsen, Dr., Singapore 1646 (SG); Lindner, Jürgen, Dr., Singapore 1646 (SG)
(74) Vertreter: Kaiser, Dieter Ralf, Dipl.-Ing.

(56) Entgegenhaltungen:
- EP-A- 0 416 244
- EP-A- 0 552 441
- US-A- 4 952 465
- PATENT ABSTRACTS OF JAPAN vol. 009 no. 263 (E-351) ,19.Oktober 1985 & JP-A-60 109183 (MATSUSHITA DENKI SANGYO KK) 14.Juni 1985,

## Beschreibung

Die Erfindung betrifft einen gasdicht verschlossenen Metalloxid/Metallhydrid-Akkumulator mit im Zellengehäuse angeordneter positiver Elektrode, die ein Metalloxid umfaßt, einer negativen Elektrode, die eine Wasserstoffspeicherlegierung umfaßt, mit einem zwischen positiver und negativer Elektrode angeordneten Separator, der einen alkalischen Elektrolyten enthält, sowie mit einer den Sauerstoffverzehr unterhaltenden, in elektrisch leitendem Kontakt zur negativen Elektrode stehenden Hilfselektrode.

Ein vorzugsweises Anwendungsgebiet der Erfindung sind Knopfzellen des Ni/Metallhydrid-Typs aufgrund ihrer Wirtschaftlichkeit und ihres bewährten Einsatzes in netzunabhängigen Geräten. Allerdings reicht ihre Belastbarkeit mit hohen Strömen nicht an diejenige von Rundzellen heran. Als Grund mag eine Rolle spielen, daß die Leitfähigkeit der negativen Knopfzellen-Elektrode relativ gering ist. Die geringere Leitfähigkeit ist durch den Anteil eines Kunststoffbinders an der Massemischung bedingt, der vorzugsweise aus PTFE besteht und bis zu 10% betragen kann. Andererseits ist der Zusatz des Bindemittels aus Gründen der mechanischen Festigkeit notwendig. Er erteilt der Masse außerdem einen hydrophoben Charakter und schafft die Voraussetzung für einen hinreichenden Gasverzehr bei Überladung und Umpolung. Wiederaufladbare, gasdichte Metalloxid/Hydrid-Knopfzellen nach dem eingangs formulierten Gattungsbegriff müssen sowohl überladefähig als auch umpolsicher sein.

Während der Überladung wird an der positiven Elektrode Sauerstoff erzeugt, welcher zur Vermeidung eines unzulässig hohen Innendrucks verzehrt werden muß. Das für diesen Zweck geeignete Mittel ist eine Hilfselektrode, gewöhnlich aus einer Mischung von Ruß, Graphit und PTFE bestehend, welche sich auf der Rückseite der negativen Hauptelektrode befindet und mit dieser elektrisch kurzgeschlossen ist. Der Mechanismus des Sauerstoffverzehrs läßt sich durch die Gleichung (1) O₂ + 4e⁻ + 4 H₂O = 4 OH⁻ beschreiben.

Eine Metalloxid/Hydrid-Knopfzelle mit einer Hilfselektrode für den Sauerstoffverzehr läßt sich beispielsweise der DE-OS 3929306, Figur 4, entnehmen.

Gelangt ein Metalloxid/Hydrid-Akkumulator jedoch nach erschöpfender Entladung der positiven Elektrode, welche im allgemeinen die Entladung begrenzt, in die Polumkehr, so entwickelt nunmehr die positive Elektrode Wasserstoff, welcher direkt von der negativen Elektrode unter Umsetzung zu Metallhydrid aufgenommen werden kann. Dies kann jedoch nur an einer direkt mit der Gasphase in Verbindung stehenden metallischen Oberfläche geschehen. Ein Flüssigkeitsfilm an der Metalloberfläche behindert die Wasserstoffaufnahme erheblich. Die Anwesenheit eines hydrophoben Bindemittels kann den Elektrolyten von Teilen der Elektrodenoberfläche fernhalten und so das Eindringen des Wasserstoffs in das Innere der negativen Masse erleichtern.

Aus der US-A - 4 952 465 ist ein alkalischer Akkumulator insbesondere mit negativer Cadmium- oder Zinkelektrode zu entnehmen. Die negative Elektrode ist dabei mit einer gasverzehrenden Schicht, die ein Wasserstoff-Speicher-Material enthält, versehen.

Aus der DE-OS 4029503 ist auch ein alkalischer Akkumulator mit einer negativen Metallhydrid-Elektrode bekannt, deren aktiver Masse eigens für die Oxidation des bei der Polumkehr anfallenden Wasserstoffs spezielle Katalysatoren aus Raney-Nickel oder Raney-Silber zugesetzt sind.

Gleichwohl bleibt der mit dem Einsatz eines hydrophoben Bindemittels verbundene Nachteil einer verminderten elektrischen Leitfähigkeit bestehen. Einerseits gewährleistet der Binder bei Masse-Elektroden den Zusammenhalt und die Hydrophobizität des Pulverpreßlings, andererseits ist seine Wirkung diejenige eines elektrischen Isolators, so daß ein guter Schutz gegen Polumkehr und eine gute Strombelastbarkeit sich gegenseitig ausschließen.

Der Erfindung liegt die Aufgabe zugrunde, einen Akkumulator, insbesondere in Form einer Knopfzelle, für das alkalische Metalloxid/Wasserstoffsystem verfügbar zu machen, der ohne Einschränkung seiner gasdichten Funktion auch mit hohen Strömen betrieben werden kann.

Die Aufgabe wird erfindungsgemäß mit einem Akkumulator gelöst, wie er durch Patentanspruch 1 definiert ist.

Die in einer Metalloxid/Metallhydrid-Zelle üblicherweise für den Sauerstoffverzehr vorgesehene Hilfselektrode im Falle einer Polumkehr auch die rasche Umsetzung des Wasserstoffs, da sie wie die negative Hauptelektrode eine Wasserstoffspeicherlegierung als Hauptkomponente aufweist und mit der negativen Elektrode der Zelle elektrisch leitend verbunden ist und insbesondere an der Rückseite der negativen Hauptelektrode unmittelbar anliegt. Diese Hilfselektrode kann vorteilhaft in Rundzellen und prismatischen Zellen verwendet werden, besonders geeignet ist sie für den Einsatz in Knopfzellen.

Die erfindungsgemäße Hilfselektrode wird durch Mischen der besagten Wasserstoffspeicherlegierung mit einem kohlenstoffhaltigen und zugleich hydrophobierenden Material, vorzugsweise einer Mischung aus Graphit, Ruß und PTFE, in einer hochtourigen Messermühle hergestellt. Das resultierende Gemisch ist äußerst feinkörnig und homogen. Hierdurch wird einerseits für eine Vielzahl von Dreiphasengrenzen gesorgt, welche für den Sauerstoffverzehr benötigt werden, andererseits werden auch dem Wasserstoff zahlreiche Oberflächen ohne Elektrolytbedeckung dargeboten, die es ihm ermöglichen, rasch in die Legierungspartikel einzudringen.

Es hat sich erfindungsgemäß ferner als vorteilhaft erwiesen, die negative Hauptelektrode aus einem Pulver herzustellen, welches neben der Wasserstoffspeicherlegierung als dem wesentlichen Bestandteil noch Nickelmetall oder Kupfermetall in Pulverform als hochleitfähige Komponenten enthält. Als alternatives Leitmittel kann auch Graphit eingesetzt werden.

Weiterhin kann die Elektrodenmischung zur Verbesserung der mechanischen Stabilität des Preßlings ein Bindemittel enthalten, welches jedoch im Gegensatz zu dem in der Hilfselektrode verwendeten Binder hydrophil ist oder zumindest nur einen schwach ausgeprägten hydrophoben Charakter besitzt, z.B. Polyvinylalkohol oder Polyethylen.

Durch die Verbindung einer hydrophoben, aus einer Wasserstoffspeicherlegierung gebildeten Hilfselektrode mit einer negativen Hauptelektrode aus der gleichen Wasserstoffspeicherlegierung, die durch Metallzusätze ein hohes elektrisches Leitvermögen und aufgrund eines hydrophilen Bindemittelzusatzes einen hydrophilen Charakter besitzt, liegt eine Elektrodenkombination vor, welche beide Fähigkeiten, nämlich Belastbarkeit mit hohen Strömen und Verhinderung eines Druckaufbaus nach einer Polumkehr, auf sich vereinigt.

Insbesondere erlaubt hierbei die neue Hilfselektrode -im Gegensatz zu den in konventionellen Ni/Hydrid- und Ni/Cd-Zellen vorhandenen Sauerstoffverzehrelektroden- die Entfernung sowohl des Sauerstoffs als auch des Wasserstoffs aus der Gasphase. Für diese Doppelfunktion der erfindungsgemäßen Hilfselektrode ist ein starkes und dauerhaftes hydrophobes Verhalten unerläßlich.

Ihr liegt eine Massemischung folgender Zusammensetzung zugrunde: 0 bis 20 Gew.% Graphit, 0 bis 20 Gew.% Ruß, 0,5 bis 10 Gew.% PTFE, Rest bis 100 Gew.% Wasserstoffspeicherlegierung. Eine besonders vorteilhafte Mischung setzt sich aus 0 bis 4 Gew.% Graphit, 1 bis 3 Gew.% Ruß, 1 bis 4 Gew.% PTFE, Rest bis 100 Gew.% Wasserstoffspeicherlegierung zusammen.

Zur Herstellung der negativen Hauptelektrode eignen sich die folgenden Massemischungen:
1. 10 bis 50 Gew.%, vorzugsweise 20 bis 40 Gew.% Cu- oder Ni-Pulver, 0 bis 10 Gew.%, vorzugsweise 1 bis 4 Gew.% hydrophiler Binder, Rest bis 100 Gew.% Wasserstoffspeicherlegierung oder
2. 0 bis 20 Gew.%, vorzugsweise 10 bis 15 Gew.% Graphit, 0 bis 10 Gew.%, vorzugsweise 0,5 bis 4 Gew.% hydrophiler Binder, Rest bis 100 Gew.% Wasserstoffspeicherlegierung

Der Gehalt an Legierungsmetall liegt bei beiden alternativen Massemischungen (Metallpulver oder Graphit als Leitmittel) etwa zwischen 70 und 95 Gew.%.

Als Wasserstoffspeichermaterial kommen Legierungen vom LaNi₅-Typ oder TiNi-Typ infrage. Bevorzugt sind Legierungen des LaNi₅-Typs, bei denen Lanthan und/oder andere Seltenerdelemente die Mischmetallkomponente von MmNi₅-Legierungen bilden. Eine beispielhafte Legierung hat die Zusammensetzung MmNi_{4,3-x}CoₓMn_{0,3}Al_{0,4}, wobei 0,2 < x < 0,7.

Typische Massemischungen für die positive Elektrode enthalten neben Nickelhydroxid metallisches Nickel und Kobalt, Graphit sowie Kobaltoxid. Diese Zusatzstoffe wirken vorwiegend als Leitmaterial; das Kobaltoxid sorgt zusätzlich für eine Erhöhung der Sauerstoffüberspannung an der positiven Elektrode und damit für eine Erhöhung der Ladeeffektivität.

Der Gegenstand der Erfindung ist im folgenden am Beispiel einer Knopfzelle anhand der Figuren näher erläutert.
- Figur 1: zeigt eine Ni/Hydrid-Knopfzelle gemäß der Erfindung.
- Figur 2: zeigt die Oberflächenstruktur einer Hilfselektrode gemäß der Erfindung in einer Vergrößerung.
- Figur 3: zeigt Entladekapazitäten erfindungsgemäßer Knopfzellen im Vergleich zu Standardzellen.
- Figur 4: zeigt die Einstellung des internen Gasdrucks erfindungsgemäßer Knopfzellen bei verschiedenen Betriebszuständen.

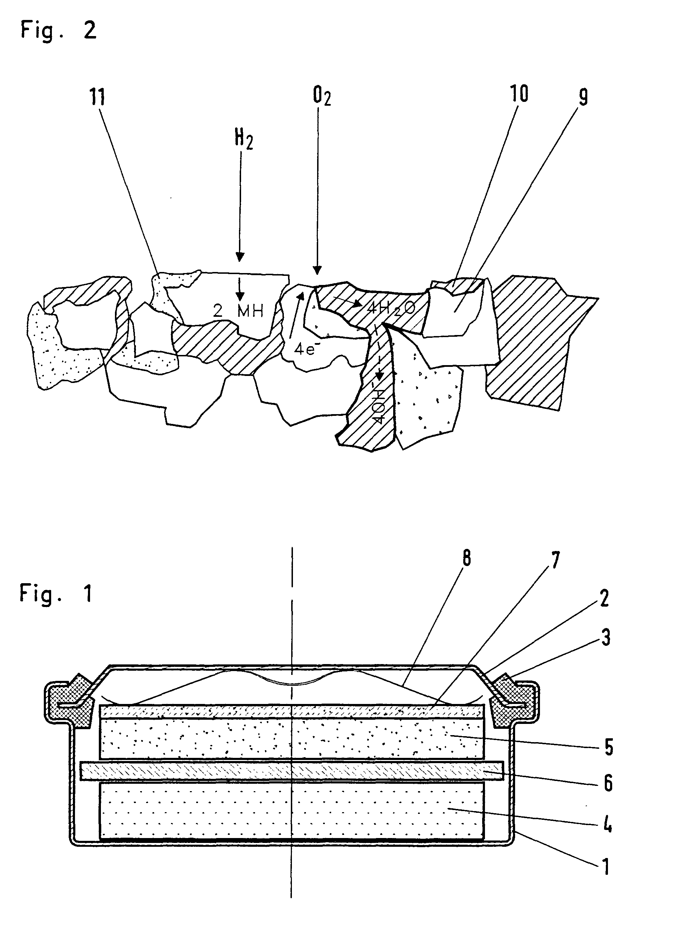

Nach Figur 1 unterscheidet sich der erfindungsgemäße Akkumulator in seinem Aufbau nicht von einer konventionellen Ni/Hydrid-Knopfzelle mit dem Gehäusebecher 1, dem Deckel 2, dem Dichtring 3, der positiven Nickelhydroxidelektrode 4, der negativen Metallhydridelektrode 5, dem elektrolytgetränkten Separator 6, der Hilfselektrode 7 für den Sauerstoffverzehr und der Druckfeder 8.

Erfindungsgemäß und entgegen der konventionellen Ausführung ist die auf die negative Elektrode rückseitig aufgepreßte Hilfselektrode jedoch ebenfalls eine Legierungselektrode und aufgrund eines PTFE-Zusatzes stark hydrophob, während die negative Elektrode selbst hydrophil ist.

Die in Figur 2 vergrößert dargestellte Oberfläche der Hilfselektrode läßt einzelne Metallhydrid-Partikel 9 erkennen, die teils von einem Elektrolytfilm 10 benetzt sind, teils aber durch hydrophobes Bindemittel 11 (PTFE) mit Nachbarpartikeln verkittet sind und wegen der wasserabstoßenden Wirkung des Bindemittels große Teile ihrer Oberfläche von flüssigem Elektrolyt unbedeckt darbieten. An diesen Stellen kann H₂ leicht in das Innere der Partikel eindringen. Er wird vom Legierungmetall absorbiert und so aus dem Gasraum entfernt.

Wiederum an anderen Stellen sind durch das gleichzeitige Vorhandensein von Elektrolyt, hydrophobem Bindemittel und freiliegender Partikeloberfläche die Voraussetzungen für einen O₂-Verzehr günstig, weil dieser gemäß Gleichung (1) in der Einleitung nur unter Vermittlung von H₂O und im elektronischen Austausch mit der festen Legierungsphase (Dreiphasenbeziehung) möglich ist.

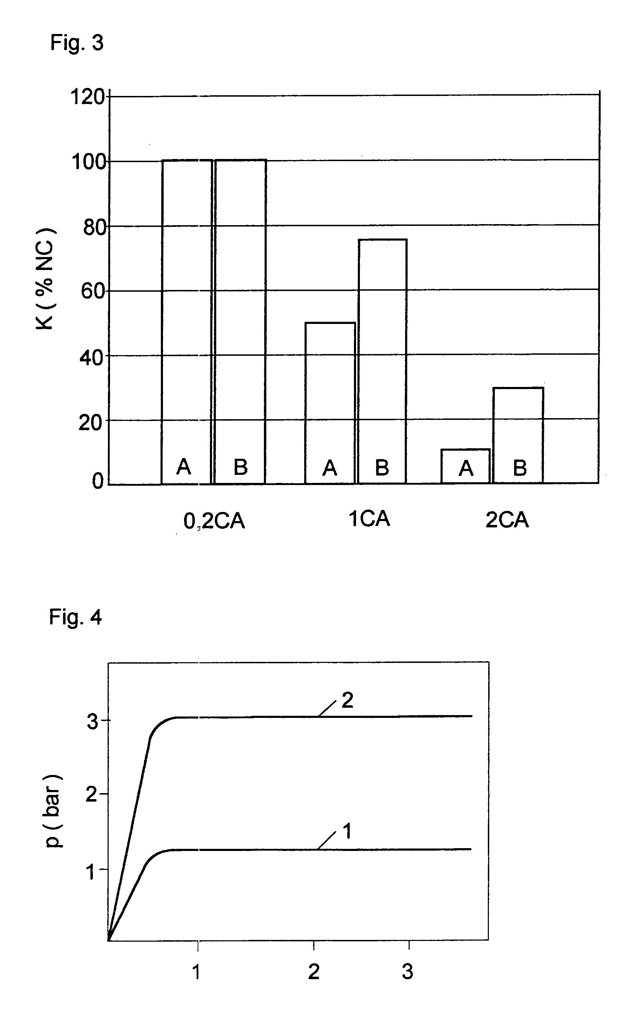

Die überlegene Hochstrombelastbarkeit von Knopfzellen, die mit erfindungsgemäßen negativen Elektroden unter Verwendung von Cu als Leitmittel und mit erfindungsgemäßen Hilfselektroden ausgestattet werden, geht aus Figur 3 hervor.

Die Masse-Zusammensetzungen der Test-Elektroden lagen im Rahmen der oben angegebenen Rezepturen. Wie aus den Balkendarstellungen ersichtlich, lagen die Entladekapazitäten K (in % der Nennkapazität NC) erfindungsgemäßer Knopfzellen (B) bei den hohen Belastungen von 1CA und 2CA beträchtlich über denen von fertigungsüblichen Standardzellen (A). Ein wesentlicher Grund für das bessere Hochstromverhalten der erfindungsgemäßen Zellen ist das Fehlen eines hydrophoben Binders in deren negativen Elektroden, was eine günstigere elektronische Leitfähigkeit bedingt.

Schließlich findet die Gasverzehr-Leistung der neuen Hilfselektrode in dem Verhalten des zellintemen Gasdrucks sowohl bei der Überladung als auch bei der Überentladung ihren Ausdruck. So liegt gemäß Figur 4 der Innendruck p [bar] einer 250mAh-Knopfzelle bei Überladung mit 0,2CA nur bei etwa 1 bar (Kurve 1). Im Falle einer Polumkehr übersteigt der Innendruck beim gleichen Strom kaum 3 bar (Kurve 2). Drücke von dieser Größe sind für die mechanische Stabilität von Knopfzellen unbedenklich.

## Patentansprüche

1. Gasdicht verschlossener Metalloxid/Metallhydrid-Akkumulator mit im Zellengehäuse angeordneter positiver Elektrode (4), die ein Metalloxid umfaßt, einer negativen Elektrode (5), die eine Wasserstoffspeicherlegierung umfaßt, mit einem zwischen positiver und negativer Elektrode angeordneten Separator (6), der einen alkalischen Elektrolyten enthält, sowie mit einer den Sauerstoffverzehr unterhaltenden, in elektrisch leitendem Kontakt zur negativen Elektrode stehenden Hilfselektrode (7), **dadurch gekennzeichnet, daß** die Hilfselektrode (7) hydrophob ist und als den Gasverzehr bei Überladung und Umpolung unterhaltendes Mittel eine Wasserstoffspeicherlegierung enthält, und daß die Hilfselektrode (7) mit der hydrophilen negativen Elektrode (5) elektrisch leitend verbunden ist.

2. Gasdicht verschlossener Akkumulator nach Anspruch 1, **dadurch gekennzeichnet, daß** die Hilfselektrode an der Rückseite der negativen Elektrode unmittelbar anliegt.

3. Gasdicht verschlossener Akkumulator nach Anspruch 1 oder 2, **dadurch gekennzeichnet, daß** dem Legierungsmaterial der Hilfselektrode ein hydrophober Binder und dem Legierungsmaterial der negativen Elektrode ein hydrophiler Binder zugesetzt ist.

4. Gasdicht verschlossener Akkumulator nach einem der Ansprüche 1 bis 3, **dadurch gekennzeichnet, daß** dem Legierungsmaterial der negativen Elektrode wahlweise eines der Leitmittel Cu-Pulver, Ni-Pulver oder Graphit zugesetzt ist.

5. Gasdicht verschlossener Akkumulator nach einem der Ansprüche 1 bis 4, **dadurch gekennzeichnet, daß** dem Legierungsmaterial der Hilfselektrode neben Graphit und Ruß Polytetrafluoroethylen als Bindemittel zugesetzt ist.

6. Gasdicht verschlossener Akkumulator nach einem der Ansprüche 1 bis 5, **dadurch gekennzeichnet, daß** die der Hilfselektrode zugrundeliegende Massemischung aus 0 bis 20 Gew.% Graphit, 0 bis 20 Gew.% Ruß, 0,5 bis 10 Gew.% Polytetrafluoroethylen, Rest bis 100 Gew.% Wasserstoffspeicherlegierung zusammengesetzt ist.

7. Gasdicht verschlossener Akkumulator nach Anspruch 6, **dadurch gekennzeichnet, daß** die der Hilfselektrode zugrundeliegende Massemischung aus 0 bis 4 Gew.% Graphit, 1 bis 3 Gew.% Ruß, 1 bis 4 Gew.% Polytetrafluoroethylen, Rest bis 100 Gew.% Wasserstoffspeicherlegierung zusammengesetzt ist.

8. Gasdicht verschlossener Akkumulator nach einem der Ansprüche 1 bis 7, **dadurch gekennzeichnet, daß** die der negativen Elektrode zugrundeliegende Massemischung aus 10 bis 50 Gew.% Cu oder Ni-Pulver; 0 bis 10 Gew.% hydrophilem Binder; Rest bis 100 Gew.% Wasserstoffspeicherlegierung besteht.

9. Gasdicht verschlossener Akkumulator nach Anspruch 8, **dadurch gekennzeichnet, daß** die der negativen Elektrode zugrundeliegende Massemischung aus 20 bis 40 Gew.% Cu- oder Ni-Pulver, 1 bis 4 Gew.% hydrophilem Binder, Rest bis 100 Gew.% Wasserstoffspeicheriegierung besteht.

10. Gasdicht verschlossener Akkumulator nach einem der Ansprüche 1 bis 7, **dadurch gekennzeichnet, daß** die der negativen Elektrode zugrundeliegende Massemischung aus 0 bis 20 Gew.% Graphit, vorzugsweise 10 bis 15 Gew.% Graphit, 0 bis 10 Gew.%, vorzugsweise 0,5 bis 4 Gew.% hydrophilem Binder, Rest bis 100 Gew.% Wasserstoffspeicherlegierung besteht.

## Claims

1. Gas-tightly sealed metal oxide/metal hydride storage battery comprising a positive electrode (4) which is disposed in the cell casing and comprises a metal oxide, further comprising a negative electrode (5) which comprises a hydrogen storage alloy, further comprising a separator (6) which is disposed between the positive and the negative electrode and contains an alkaline electrolyte, and further comprising an auxiliary electrode (7) which sustains the oxygen consumption and is in electroconductive contact with the negative electrode, **characterized in that** the auxiliary electrode (7) is hydrophobic and contains a hydrogen storage alloy as the medium sustaining gas consumption in the event of overcharging and polarity reversal, and **in that** the auxiliary electrode (7) is electroconductively connected to the hydrophilic negative electrode (5).

2. Gas-tightly sealed storage battery according to Claim 1, **characterized in that** the auxiliary electrode lies directly against the rear of the negative electrode.

3. Gas-tightly sealed storage battery according to Claim 1 or 2, **characterized in that** the alloy material of the auxiliary electrode is admixed with a hydrophobic binder and the alloy material of the negative electrode is admixed with a hydrophilic binder.

4. Gas-tightly sealed storage battery according to any one of Claims 1 to 3, **characterized in that** the alloy material of the negative electrode is optionally admixed with one of the conducting media Cu powder, Ni powder or graphite.

5. Gas-tightly sealed storage battery according to any one of Claims 1 to 4, **characterized in that** the alloy material of the auxiliary electrode is admixed with polytetrafluoroethylene as well as graphite and carbon black as binder.

6. Gas-tightly sealed storage battery according to any one of Claims 1 to 5, **characterized in that** the composition mixture on which the auxiliary electrode is based is composed of from 0 to 20 wt% of graphite, from 0 to 20 wt% of carbon black, from 0.5 to 10 wt% of polytetrafluoroethylene, the remainder up to 100 wt.% being hydrogen storage alloy.

7. Gas-tightly sealed storage battery according to Claim 6, **characterized in that** the composition mixture on which the auxiliary electrode is based is composed of from 0 to 4 wt.% of graphite, from 1 to 3 wt.% of carbon black, from 1 to 4 wt.% of polytetrafluoroethylene, the remainder up to 100 wt.% being hydrogen storage alloy.

8. Gas-tightly sealed storage battery according to any one of Claims 1 to 7, **characterized in that** the composition mixture on which the negative electrode is based is composed of from 10 to 50 wt.% of Cu or Ni powder, from 0 to 10 wt.% of hydrophilic binder, the remainder up to 100 wt.% being hydrogen storage alloy.

9. Gas-tightly sealed storage battery according to Claim 8, **characterized in that** the composition mixture on which the negative electrode is based is composed of from 20 to 40 wt.% of Cu or Ni powder, from 1 to 4 wt.% of hydrophilic binder, the remainder up to 100 wt.% being hydrogen storage alloy.

10. Gas-tightly sealed storage battery according to any one of Claims 1 to 7, **characterized in that** the composition mixture on which the negative electrode is based is composed of from 0 to 20 wt.% of graphite, preferably from 10 to 15 wt.% of graphite, from 0 to 10 wt.%, preferably from 0.5 to 4 wt.%, of hydrophilic binder, the remainder up to 100 wt.% being hydrogen storage alloy.

## Revendications

1. Accumulateur étanche oxyde métallique/hydrure métallique comprenant un boîtier de pile avec une électrode positive (4) formée d'un oxyde métallique, une électrode négative (5) comprenant un alliage stockant l'hydrogène, un séparateur (6) entre l'électrode positive et l'électrode négative, contenant un électrolyte alcalin ainsi qu'une électrode auxiliaire (7) assurant la consommation d'oxygène et en contact électrique avec l'électrode négative,
**caractérisé en ce que**
l'électrode auxiliaire (7) est hydrophobe et contient comme moyen soutenant la consommation de gaz en cas de surcharge et d'inversion de polarité, un alliage stockant l'hydrogène, et l'électrode auxiliaire (7) est reliée électriquement à l'électrode négative (5) hydrophile.

2. Accumulateur étanche selon la revendication 1,
**caractérisé en ce que**
l'électrode auxiliaire est directement appliquée contre le côté arrière de l'électrode négative.

3. Accumulateur étanche selon l'une quelconque des revendications 1 ou 2,
**caractérisé en ce que**
la matière de l'alliage de l'électrode auxiliaire contient un liant hydrophobe et la matière de l'alliage de l'électrode négative contient un liant hydrophile.

4. Accumulateur étanche selon l'une quelconque des revendications 1 à 3,
**caractérisé en ce que**
la matière de l'alliage de l'électrode négative contient l'un des agents conducteurs Cu en poudre, Ni en poudre ou graphite.

5. Accumulateur étanche selon l'une quelconque des revendications 1 à 4,
**caractérisé en ce qu'**
en plus du graphite et du noir de carbone, la matière de l'alliage de l'électrode auxiliaire contient du polytétrafluoroéthylène PTFE comme liant.

6. Accumulateur étanche selon l'une quelconque des revendications 1 à 5,
**caractérisé en ce que**
le mélange de masse à la base de l'électrode auxiliaire est formé de 0 à 20 % en poids de graphite, de 0 à 20 % en poids de noir de fumée, de 0,5 à 10 % en poids de polytétrafluoroéthylène PTFE et le complément à 100 % en poids étant de l'alliage stockant l'hydrogène.

7. Accumulateur étanche selon la revendication 6,
**caractérisé en ce que**
le mélange de la masse à la base de l'électrode auxiliaire contient entre 0 et 4 % en poids de graphite, entre 1 et 3 % en poids de noir de fumée, entre 1 et 4 % en poids de polytétrafluoroéthylène PTFE, et le complément à 100 % en poids étant un alliage stockant l'hydrogène.

8. Accumulateur étanche selon l'une quelconque des revendications 1 à 7,
**caractérisé en ce que**
le mélange de masse à la base de l'électrode négative se compose de 10 à 50 % en poids de poudre de Cu ou Ni, de 0 à 10 % en poids d'un liant hydrophile et le complément à 100 % en poids étant l'alliage stockant l'hydrogène.

9. Accumulateur étanche selon la revendication 8,
**caractérisé en ce que**
le mélange de masse constituant l'électrode négative se compose de 20 à 40 % en poids de poudre de Cu ou Ni, de 1 à 4 % en poids d'un liant hydrophile, le complément à 100 % en poids étant l'alliage stockant l'hydrogène.

10. Accumulateur étanche selon l'une quelconque des revendications 1 à 7,
**caractérisé en ce que**
le mélange de masse à la base de l'électrode négative se compose de 0 à 20 % en poids, de préférence de 10 à 15 % en poids de graphite, de 0 à 10 % en poids et de préférence de 0,5 à 4 % en poids d'un liant hydrophile et le complément à 100% en poids étant l'alliage stockant l'hydrogène.
